Europäisches Patentamt

European Patent Office

Office européen des brevets

(19)

(11) Veröffentlichungsnummer: **0 061 726**
**B1**

(12)                    EUROPÄISCHE PATENTSCHRIFT

(45) Veröffentlichungstag der Patentschrift:
16.11.83

(51) Int. Cl.³: **C 09 D 7/14**// C09D3/393

(21) Anmeldenummer: 82102491.6

(22) Anmeldetag: 25.03.82

(54) Verfahren zum Herstellen von wässrigen Lacken.

(30) Priorität: 31.03.81 DE 3112659

(43) Veröffentlichungstag der Anmeldung:
06.10.82 Patentblatt 82/40

(45) Bekanntmachung des Hinweises auf die Patenterteilung: 16.11.83 Patentblatt 83/46

(84) Benannte Vertragsstaaten:
AT BE CH DE FR GB IT LI NL SE

(56) Entgegenhaltungen:
DE B 1 669 064
US A 3 869 414
US A 3 959 199

(73) Patentinhaber: BASF Farben + Fasern Aktiengesellschaft
Am Neumarkt 30
D-2000 Hamburg 70 (DE)

(72) Erfinder: Schwarz, Günther, Dipl.-Chem. Dr.
Zum Hiltruper See 25
D-4400 Münster (DE)

(74) Vertreter: Habbel, Hans-Georg, Dipl.-Ing.
Postfach 3429 Am Kanonengraben 11
D-4400 Münster (DE)

## Verfahren zum Herstellen von wäßrigen Lacken

Die Erfindung bezieht sich auf ein Verfahren zum Herstellen von wäßrigen Lacken mit einem Gehalt an mineralischen Füllstoffen und/oder Pigmenten. In diesen Lacken erfolgt praktisch keine Sedimentation.

Es ist in der Lackindustrie praxisüblich, Lacke, insbesondere auch wäßrige Lacke herzustellen, die mineralische Füllstoffe und/oder Pigmente enthalten. Ihr Nachteil besteht jedoch darin, daß sowohl Füllstoffe als auch Pigmente beim Lagern der Lacke absetzen. Je nach der Härte des Bodensatzes wird ein Wiederaufrühren und gleichmäßiges Verteilen der Feststoffe in dem Lack schwierig bis unmöglich. Anorganische Füllstoffe werden neben Wachstypen in der Praxis als Mattierungsmittel zum Mattieren des fertigen Lackfilmes eingesetzt.

Die Aufgabe der Erfindung bestand darin, die vorstehend aufgeführten Nachteile zu beseitigen.

Diese Aufgabe wurde gelöst durch ein Verfahren zum Herstellen von wäßrigen Lacken mit einem Gehalt an mineralischen Füllstoffen und/ oder Pigmenten, das dadurch gekennzeichnet ist, daß man eine zwischen 80 °C und 100 °C, vorzugsweise zwischen 95 °C und 100 °C heiße Wachsemulsion in Wasser unter starkem Rühren in den wäßrigen Lack, der die mineralischen Füllstoffe und/oder Pigmente enthält, einfließen läßt, wobei mindestens ein Teil der Füllstoff- und/oder Pigmentpartikel mit einer Wachshülle überzogen wird.

Der Wachsanteil, der in den wäßrigen Lack eingetragen wird, soll mindestens so hoch sein, daß sämtliche im Lack vorhandenen mineralischen Füllstoff- und/oder Pigmentpartikel vom Wachs umhüllt werden können.

Besonders gute Ergebnisse werden erhalten, wenn auf 0,1-15 Gewichtsteile mineralische Füllstoffe und/oder Pigmente 0,5-5 Gewichtsteile Wachs kommen.

Wachse sind als Lackadditive gebräuchlich und zwar vorwiegend zur Mattierung der Lackfilme. Hierfür kommen vor allem Wachse mit höherem Schmelzbereich in Betracht. Die Einarbeitung in die wäßrigen Lacke erfolgt durch Einrühren von gepulvertem Hartwachs oder aus einer Wachslösung oder Wachspasten.

Es war überraschend und nicht vorhersehbar, daß eine ganz spezielle Arbeitsweise des Einarbeitens von Wachs in einen wäßrigen Lack zu einer ganz neuen unerwarteten Eigenschaft für das fertige Material führte, nämlich ein deutliches Verringern der Sedimentationsneigung der festen Bestandteile.

Nur wenn eine auf 80 °C bis 100 °C, vorzugsweise 95 °C bis 100 °C heiße bzw. erhitzte Wachsemulsion in Wasser bei dieser Temperatur in einen wäßrigen Lack eingetragen wird, dann gibt es keine Sedimentation.

Wichtig ist es, daß der die mineralischen Füllstoffe und/oder Pigmente enthaltende wäßrige Lack stark gerührt wird. Hierbei entsteht vom Rührstab aus ein von unten nach oben sich verbreiternder Kegel, der frei von Lack ist. Am vorteilhaftesten ist es, wenn die einfließende heiße Wachsemulsion tief in den Kegel geführt wird, wo sie sich am raschesten und intensivsten in dem Lack verteilt.

Es hat sich herausgestellt, daß das günstigste Ergebnis erzielt wird, wenn der flüssige Lack eine Temperatur um 20 °C besitzt. Ist die Temperatur niedriger, so fällt das Wachs in dem wäßrigen Lack grobkörniger aus, ist die Temperatur höher, so verteilt sich das Wachs in zu feiner Form und die Oberfläche des fertigen Filmes sieht fleckig und speckig aus.

Läßt man die heiße Wachsemulsion im Wasser auf eine Temperatur von unter 80° abkühlen, so beginnt das emulgierte bzw. gelöste Wachs beim Trübungspunkt wieder auszufallen. Wird eine derart abgekühlte Wachsmischung, die in vielen Fällen als Gel vorliegt, in den wäßrigen Lack eingearbeitet, so ist kein Anzeichen für eine Sedimentationsverhindernde Wirkung zu finden.

Für das Herstellen einer Wachsemulsion in Wasser wird kein Patentschutz verlangt. Die Herstellung erfolgt durch Einrühren von Wachsschuppen oder Wachspulver in das vorgelegte heiße Wasser. Daran schließt sich ein kurzes Aufkochen auf 100 °C bis eine gleichmäßige Emulsion vorliegt. Im allgemeinen wird eine 10-20 Gew.-%ige Emulsion hergestellt, die mit weiterem heißem Wasser verdünnt werden kann.

Geeignet sind Wachse, deren Schmelzpunkt über 60 °C liegt und deren Trübungspunkt in Toluol zwischen 35 °C und 45 °C liegt. Bevorzugt geeignete Wachse dieser Art sind Montanwachse, die gebleicht und modifiziert sind bzw. Esterwachse auf Basis modifizierter Montanwachse. Die Wachse können mit einem nicht ionogenen Emulgatorsystem gekoppelt sein.

Die geeigneten wäßrigen Lacke enthalten in der Regel keine organischen Lösungsmittel und sind mit Wasser mischbar und verdünnbar. Die Bindemittel sind in den wäßrigen Lacken entweder gelöst oder liegen in Form einer Dispersion vor. Hinsichtlich der Bindemittel und der Lacke bestehen keine Einschränkungen, vorausgesetzt sie sind mit Wasser mischbar. Bei der Verwendung von säurehärtenden Reaktionslacken auf Basis von Aminoplastharzen oder Phenoplastharzen müssen solche mineralischen Füllstoffe gewählt werden, die säurebeständig sind.

Zu den mineralischen Füllstoffen gehören auch anorganische Mattierungsmittel, die die Aufgabe haben, einen Lack zu mattieren, d. h., die Oberfläche eines aus einem derartigen flüssigen Lack hergestellten Filmes soll nach seiner Erhärtung nicht glänzend sondern matt aussehen. Hierbei kann der Mattierungsgrad in weiten Grenzen variiert werden. Setzen sich die Füllstoffe aber im Lack ab und lassen sich nicht mehr gleichmäßig aufrühren und verteilen, so ist der gewünschte Mattierungsgrad nicht mehr zu reproduzieren. Ganz besonders wirkt sich dieser Umstand aus bei Möbellacken oder Papierbeschichtungen, die transparent erscheinende mineralische Füllstoffe enthalten, so daß trotz Füllstoffgehalt der Film durchsichtig bleibt. Solche praktisch unsichtbaren mineralischen Füllstoffe haben einen Brechungsindex von 1,45-1,47, der dem Brechungsindex der meisten Kunstharze entspricht. Solche mineralischen Füllstoffe sind z. B. amorphe Kieselsäuren.

Zu den in wäßrigen Lacken eingesetzten mineralischen Füllstoffen gehören z. B. Quarz, Bariumsulfat, Kreide, Talkum. Zu den Pigmenten gehören sämtliche färbenden anorganischen und organischen Pigmente.

Die mittlere Teilchengröße der mineralischen Füllstoffe und/oder Pigmente liegt unter 10 μm. Größere Teilchen sollen nur in geringen Anteilen vorhanden sein.

Mit Hilfe des erfindungsgemäßen Verfahrens wird die Sedimentationsneigung der mineralischen Füllstoffe und/oder Pigmente deutlich verringert. Die Lacke lassen sich über einen langen Zeitraum lagern, ohne daß irgendein Absetzen zu bemerken ist.

Ohne daß bisher für dieses Phänomen eine exakte Erklärung möglich ist, deuten alle Versuche darauf hin, daß bei der Einarbeitung der heißen Wachsemulsion in den wäßrigen Lack die einzelnen mineralischen Teilchen von einer Wachsschicht umhüllt werden.

Die nachfolgenden Beispiele sollen die Erfindung erläutern, aber nicht einschränken. Prozentangaben beziehen sich auf Gew-%, Teile auf Gewichtsteile.

Beispiel 1

Ein weichmacherhaltiger, wäßriger Lack auf der Basis von mit Methanol verethertem Melamin-Formaldehyd-Harz mit einem Bindemittelfestkörper von 60 % und einem eindispergierten Anteil von 5 % amorpher Kieselsäure mit einem Brechungsindex von 1,46 und einer mittleren Teilchengröße zwischen 2 und 8 μm, bezogen auf 100 Teile des wäßrigen Lackes, wird mit Hilfe eines Rührers bei 2 000 Umdrehungen/min. gerührt. In den entstandenen Rührkegel wird eine 10 %ige Wachsemulsion in Wasser, die auf einer Temperatur von 98 °C gehalten wird, langsam in den wäßrigen Lack einlaufen gelassen. Das Rühren wird noch eine Zeitlang nach Beendigung des Einfließens fortgesetzt.

Zur Herstellung der Wachsemulsion wurde ein Esterwachs auf Basis eines gebleichten und modifizierten Montanwachses verwendet. Das Wachs hatte einen Schmelzpunkt von 78 bis 80 °C, einen Kegelfließpunkt bei 25 °C nach Höppler von ca. 100 kg/cm², eine Penetrometerzahl bei 25 °C/100 g/5 sec. bei 3,5, eine Dichte bei 20 °C von 1,01 bis 1,02, eine Schmelzviskosität nach Ubbelohde bei 100 °C von ca. 27 Centistokes und einen Trübungspunkt in Toluol von ca. 39 °C. Zur Herstellung der Wachsemulsion wurde heißes wasser vorgelegt, in das die Wachsschuppen eingerührt wurden, so lange bis sie sich zu einer Emulsion gelöst hatten. Anschließend wurde die Mischung kurz aufgekocht und auf 10 Gew-% Wachs eingestellt. Bis zur Verarbeitung wurde die Temperatur auf 98 °C aufrechterhalten.

Der so hergestellte und das Wachs enthaltende wäßrige Lack zeigte nich nach 4 Wochen Lagerung bei 20 °C keine Absetzerscheinungen.

Der die amorphe Kieselsäure enthaltende wäßrige Lack setzte dagegen ohne Wachseinfällung nach kurzer Zeit deutlich ab und der mineralische Füllstoff war bereits nach 14 Tagen vollständig sedimentiert.

Beispiel 2

Der im Beispiel 1 beschriebene, den mineralischen Füllstoff enthaltende wäßrige Lack war nach 14-tägigem Stehen vollständig abgesetzt. Danach wurde dieser Lack kräftig aufgerührt und auf die in Beispiel 1 beschriebene Weise die 10 %ige wäßrige Wachsemulsion bei 98 °C eingetragen. Nach beendigtem Einfließen der Wachsemulsion wurde der wäßrige Lack weiter gelagert. Auch nach 4 Wochen zeigte er keine Absetzerscheinungen mehr.

Beispiel 3

Das Beispiel 1 wurde wiederholt, nur mit dem Unterschied, daß die heiße Wachsemulsion vor dem Einbringen in den wäßrigen Lack auf Raumtemperatur herabgekühlt wurde. Die entstandene Paste wurde dann unter Rühren in den wäßrigen Lack eingetragen.

Diese Lackzubereitung zeigte bereits nach 14 Tagen deutliche Absetzerscheinungen.

Ansprüche

1. Verfahren zum Herstellen von wäßrigen Lacken mit einem Gehalt an mineralischen Füllstoffen und/oder Pigmenten, dadurch gekennzeichnet, daß man eine zwischen 80 °C und 100 °C heiße wachsemulsion in Wasser unter starkem Rühren in den wäßrigen Lack, der die mineralischen Füllstoffe und/oder Pigmente enthält, einfließen läßt, wobei mindestens ein Teil der Füllstoff- und/oder Pigmentpartikel mit einer Wachshülle überzogen wird.

2. Verfahren nach Anspruch 1, dadurch gekennzeichnet, daß auf 0,1 bis 15 Gewichtsteile mineralische Füllstoffe und/oder Pigmente 0,5 bis 5 Gewichtsteile Wachs kommen.

3. Verfahren nach den Ansprüchen 1 oder 2, dadurch gekennzeichnet, daß man für die Wachsemulsion Wachse mit einem Schmelzpunkt über 60 °C und einem Trübungspunkt in Toluol zwischen 35 °C und 45 °C verwendet.

4. Verfahren nach den Ansprüchen 1 bis 3, dadurch gekennzeichnet, daß man für die Wachsemulsion Wachse verwendet, die mit einem nicht ionogenen Emulgatorsystem gekoppelt sind.

## Claims

1. Process for the preparation of aqueous lacquers containing mineral fillers and/or pigments, characterised in that a wax emulsion in water, the emulsion being at between 80 °C and 100 °C, is allowed to run into the aqueous lacquer, containing the mineral fillers and/or pigments, with vigorous stirring, whereby at least a proportion of the filler particles and/or pigment particles become coated with a wax shell.

2. Process according to Claim 1, characterised in that 0.5 to 5 parts by weight of wax are used per 0.1 to 15 parts by weight of mineral fillers and/or pigments.

3. Process according to Claims 1 or 2, characterised in that waxes having a melting point of above 60 °C and a cloud point, in toluene, of between 35 °C and 45 °C are used for the wax emulsion.

4. Process according to Claims 1 to 3, characterised in that waxes which are coupled with a nonionic emulsifier system are used for the wax emulsion.

## Revendications

1. Procédé de préparation de peintures aqueuses contenant des charges et/ou pigments minéraux, caractérisé par le fait que l'on introduit par écoulement, dans la peinture aqueuse qui contient les charges et/ou pigments minéraux, en agitant énergiquement, une émulsion de cire dans l'eau qui est à une température de 80 à 100 °C, au moins une partie des particules de charge et/ou de pigment se revêtant d'une enveloppe de cire.

2. Procédé selon la revendication 1, caractérisé par le fait que pour 0,1 à 15 parties en poids de charges et/ou pigments minéraux, on introduit 0,5 à 5 parties en poids de cire.

3. Procédé selon l'une des revendications 1 et 2, caractérisé par le fait que l'on utilise, pour l'émulsion de cire, des cires ayant un point de fusion supérieur à 60 °C et un point de trouble dans le toluène compris entre 35 et 45 °C.

4. Procédé selon l'une des revendications 1 à 3, caractérisé par le fait que pour l'émulsion de cire, on utilise des cires qui sont jointes à un système émulsifiant non ionogène.